# EUROPEAN PATENT APPLICATION

(11) **EP 4 477 358 A1**
(43) Date of publication of application: **18.12.2024**
(21) Application number: 23915170.7
(22) Date of filing: 18.10.2023
(51) Int. Cl.: B24B 23/02, B25F 5/00

(54) **HANDHELD STRAIGHT GRINDER**

(30) Priority: 25.04.2023 CN 202310453073
(71) Applicant: Suzhou Creationspace Intelligent Technology Co., Ltd., Suzhou, Jiangsu 215000 (CN)
(72) Inventor: Yang, Yong, Suzhou, Jiangsu 215000 (CN)
(74) Representative: Chung, Hoi Kan
(86) International application number: PCT/CN2023/125111
(87) International publication number: WO 2024/221759

(57) **Abstract**

A hand-held straight grinder is provided. The hand-held straight grinder includes an elastic collet, an output shaft, a clutch assembly and a power assembly, where an opening is formed in one end of the elastic collet, and communicates with an internal space of the elastic collet; one end of the output shaft is in transmission connection to the power assembly, and the other end of the output shaft axially sleeves the elastic collet in a sliding manner, and is radially and fixedly connected to the elastic collet; the other end initially extends to the opening, and the opening is in a radial contracted state through cooperation; the clutch assembly includes a toggling unit, a first clutch unit and a second clutch unit, where the toggling unit is located between the first clutch unit and the second clutch unit.

## Description

### TECHNICAL FIELD

The present disclosure relates to the technical field of electric tools, in particular to a hand-held straight grinder.

### BACKGROUND

A straight grinder is a hand-held electric tool used for polishing various small and micro items, such as mobile phones, and small household appliances. The straight grinder can also be used for carving, punching, and other processing of the small and micro items. An existing straight grinder includes a grinder body and grinding heads. The straight grinder is usually provided with a plurality of grinding heads to meet different usage needs. Correspondingly, the grinding heads are detachably mounted on the grinder body of the straight grinder to facilitate replacement of different grinding heads.

However, when the grinding heads of the existing straight grinder are disassembled and assembled, one hand needs to press a spindle locking button and the other hand needs to tighten a locking nut, which makes disassembling and assembling steps more complicated and leads to lower disassembling and assembling efficiency. Therefore, it is necessary to propose further solutions to solve the above problem.

### SUMMARY

The present disclosure aims to provide a hand-held straight grinder to overcome shortcomings existing in the prior art.

In order to solve the technical problems described above, the technical solution of the present disclosure is:
the hand-held straight grinder includes an elastic collet assembly, an output shaft, a clutch assembly and a power assembly, where
the elastic collet assembly contains an elastic collet and a collet connector, and a tail of the elastic collet is connected to a front end of the collet connector;
an opening is formed in one end of the elastic collet, and the opening communicates with an internal space of the elastic collet;
one end of the output shaft is in transmission connection to the power assembly, and the other end of the output shaft axially sleeves the elastic collet assembly in a sliding manner, and is radially and fixedly connected to the elastic collet assembly; the other end initially extends to the opening, and the opening is in a radial contracted or expanded state through cooperation;
the clutch assembly includes a toggling unit, a first clutch unit and a second clutch unit;
the toggling unit is located between the first clutch unit and the second clutch unit, and when the toggling unit moves, the elastic collet can be driven through the first clutch unit to axially move relative to the output shaft, whereby the opening is in the radial expanded state; and the toggling unit also receives restoring force from the second clutch unit when moving.

As improvement of the hand-held straight grinder of the present disclosure, at least one notch axially extending to an end surface is formed in an opening end of the elastic collet.

As improvement of the hand-held straight grinder of the present disclosure, a wall surface cooperating with the output shaft, of the opening end of the elastic collet is a conical surface.

As improvement of the hand-held straight grinder of the present disclosure, the hand-held straight grinder further includes a pin, the pin radially penetrates through the collet connector, chutes axially extending are formed in the output shaft, and the pin extends into the chutes, and slides along the chutes along with the elastic collet assembly.

As improvement of the hand-held straight grinder of the present disclosure, the chutes are centrally and symmetrically distributed on the output shaft, two ends of the pin extend out of the corresponding chutes, a chuck also sleeves the output shaft, and the two ends of the pin are embedded in the chuck respectively.

As improvement of the hand-held straight grinder of the present disclosure, one end of the first clutch unit can be abutted against on the chuck and the pin, and the elastic collet is driven by the pin to axially move relative to the output shaft.

As improvement of the hand-held straight grinder of the present disclosure, a spring also sleeves the output shaft, and the spring is initially in a compressed state; and one end of the spring is abutted against on a limit sleeve, the limit sleeve sleeves the output shaft and is abutted against a step surface of the output shaft, and the other end of the spring is abutted against on the chuck.

As improvement of the hand-held straight grinder of the present disclosure, the toggling unit includes a toggling rod and a rotary clutch, where
a first through hole is formed in a center of the rotary clutch, the output shaft penetrates through the first through hole and maintains a distance from a hole wall, a plurality of skewed teeth extending into the first clutch unit are arranged at one end of the rotary clutch, and an acting surface of each skewed tooth cooperates with a corresponding bevel in the first clutch unit; and the toggling rod is connected to the rotary clutch, and can drive the rotary clutch to rotate voluntarily when rotating, and the rotary clutch pushes the first clutch unit to axially move through voluntary rotation.

As improvement of the hand-held straight grinder of the present disclosure, each skewed tooth consists of two or more continuous bevels or helical surfaces, the quantity of the skewed teeth is three, and the three skewed teeth are distributed in a circumferential direction at one end of the rotary clutch in a uniformly-spaced manner.

As improvement of the hand-held straight grinder of the present disclosure, the first clutch unit includes a first axial clutch, a first spring and a first detent ring, where
a second through hole is formed in a center of the first axial clutch, the output shaft penetrates through the second through hole and maintains a distance from the hole wall, the bevels cooperating with the skewed teeth are arranged on an inner side wall of the first axial clutch, and a front end of the first axial clutch can drive the elastic collet to axially move relative to the output shaft;
and the first spring sleeves the first axial clutch, one end of the first spring is abutted against on a boss of the first axial clutch, the other end of the first spring is abutted against on the first detent ring, and elastic restoring force is provided for the first axial clutch when the first axial clutch drives the elastic collet to axially move.

As improvement of the hand-held straight grinder of the present disclosure, the second clutch unit includes a second axial clutch, a second spring and a second detent ring, where
the second axial clutch sleeves the output shaft, and a front end of the second axial clutch is abutted against a rear end of the rotary clutch; and the second spring sleeves the second axial clutch, one end of the second spring is abutted against on a boss of the second axial clutch, the other end of the second spring is abutted against on the second detent ring, and elastic restoring force is provided for the rotary clutch through the second axial clutch when the rotary clutch moves back.

As improvement of the hand-held straight grinder of the present disclosure, the first detent ring is abutted against on a bulge I of an inner housing, and the second detent ring is abutted against on a bulge II of the inner housing; and the first clutch unit, the toggling unit and the second clutch unit are in serial connection, and are axially placed in a floating manner between the bulge I and the bulge II.

As improvement of the hand-held straight grinder of the present disclosure, a mounting hole is formed in a rear end of the second axial clutch, a part of the mounting hole and the second axial clutch are concentrically arranged, remaining parts of the mounting hole and the second axial clutch are eccentrically arranged, a hole diameter of an eccentric part is greater than a hole diameter of a concentric part, a limit slot is formed in one end of the output shaft, and the limit slot is assembled in the concentric part of the mounting hole; and the hole diameter of the eccentric part is greater than an outer diameter of one end of the output shaft, and the hole diameter of the concentric part is smaller than the outer diameter of one end of the output shaft.

As improvement of the hand-held straight grinder of the present disclosure, the power assembly includes a motor, a main control circuit board and a power supply, an output end of the motor and one end of the output shaft are in transmission connection, the power supply is connected to the main control circuit board, and the main control circuit board is connected to the motor.

As improvement of the hand-held straight grinder of the present disclosure, the main control circuit board is mounted between a left housing and a right housing of the hand-held straight grinder, a charging port of the power supply is formed in a tail of the circuit board, and the charging port of the power supply is a through hole penetrating through a tail of a rear housing of the hand-held straight grinder.

As improvement of the hand-held straight grinder of the present disclosure, the hand-held straight grinder further includes a magnet I, a magnet II and a dust cover, the dust cover is in abutted connection to a tail of an outer housing of the hand-held straight grinder, a pit I is formed in the tail of the outer housing, and the magnet I is fixedly mounted in the pit I; a pit II is formed in one side of the dust cover, and the magnet II is fixedly mounted in the pit II; and the magnet I adsorbs the magnet II to close the dust cover, and at this time, the dust cover covers an outer side of the charging port of the power supply.

As improvement of the hand-held straight grinder of the present disclosure, the hand-held straight grinder further includes the inner housing, the outer housing and a rotary shell, where the outer housing includes a front housing and a rear housing, the front housing sleeves a front position of the inner housing, and is connected to the inner housing through a bayonet; the rear housing sleeves a rear position of the inner housing, and is connected to the front housing through a bayonet; and the rotary shell movably sleeves the inner housing, is located between the front housing and the rear housing, and can drive the toggling unit to rotate.

Compared with the prior art, the present disclosure has beneficial effects that the hand-held straight grinder is provided with the elastic collet, through manipulating the toggling unit in the clutch assembly, the elastic collet assembly can be driven to axially move, and the output shaft can further drive the opening clamping a grinding head in the elastic collet to open or clamp tightly, whereby the grinding head can be quickly and conveniently disassembled, assembled and replaced without auxiliary tools, which is a first core improvement point of the present disclosure. In the second clutch unit of the present disclosure, the mounting hole consists of the eccentric part having a slightly large hole diameter, and the concentric part having a slightly small hole diameter. In this way, during the assembly of the output shaft, firstly the output shaft passes through the eccentric part of the mounting hole, and then radially moves to enable the limit slot to be stuck into the concentric part of the mounting hole, and further mounting of the output shaft is convenient to complete. Through the structure of the present disclosure, pressure of a spring L acts on the output shaft to form internal acting force, and the outer shell does not bear force, whereby requirements for materials of the outer shell are reduced; and besides, a manufacturing technology is improved, production efficiency is improved, and manufacturing cost is also reduced, which is a second core improvement point of the present disclosure.

### BRIEF DESCRIPTION OF THE DRAWINGS

To explain the embodiments of the present disclosure or the technical solutions in the prior art more clearly, the drawings used in the embodiments or the prior art will be briefly introduced below. It is obvious that the drawings in the following description are only some embodiments recorded in the present disclosure, and those ordinarily skilled in the art would have been able to obtain other drawings according to these drawings without creative work.
FIG. 1 shows a perspective schematic diagram of one embodiment of a hand-held straight grinder of the present disclosure;
FIG. 2 shows a perspective schematic diagram of the hand-held straight grinder after an outer shell is removed in FIG. 1;
FIG. 3 shows a section of the hand-held straight grinder in FIG. 1;
FIG. 4 shows a perspective exploded schematic diagram of the hand-held straight grinder in FIG. 1;
FIG. 5 shows a perspective enlargement schematic diagram of an elastic collet, a collet connector and an output shaft in FIG. 4;
FIG. 6 shows a perspective enlargement schematic diagram of a clutch assembly in FIG. 4;
FIG. 7 shows a perspective enlargement schematic diagram of a first axial clutch in FIG. 4; and
FIG. 8 shows a perspective enlargement schematic diagram of a second axial clutch in FIG. 4.

### DETAILED DESCRIPTION OF THE EMBODIMENTS

The technical solutions in embodiments of the present disclosure will be described clearly and completely hereinafter with reference to the accompanying drawings in the embodiments of the present disclosure. It is obvious that the described embodiments are only a part of the embodiments of the disclosure, but not all the embodiments. Based on the embodiments in the present disclosure, all other embodiments obtained by those of ordinary skill in the art without making creative labor fall within the scope of protection of the present disclosure.

The embodiment provides a hand-held straight grinder. The hand-held straight grinder can conveniently control an opening of an elastic collet to open or clamp tightly through manipulating a toggling unit in a clutch assembly, further disassembly, assembly and replacement of the grinding heads can be conveniently achieved, and the technical problem of inconvenience in replacement of the grinding heads in the prior art is solved.

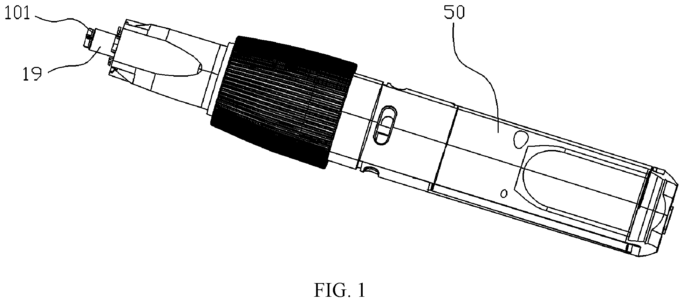

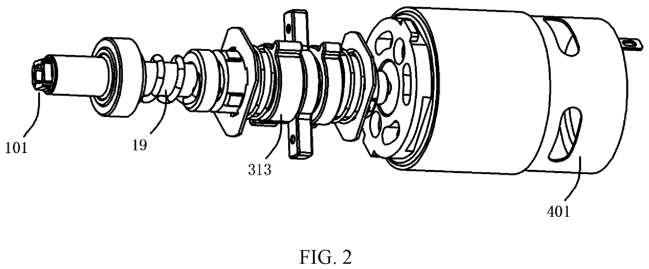

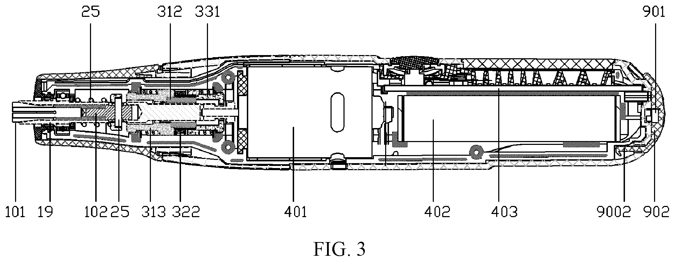

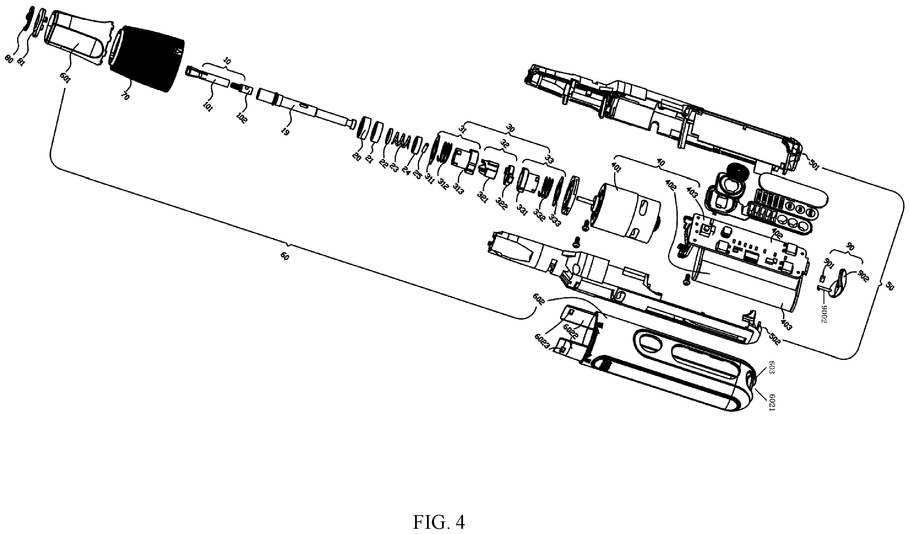

As shown in FIGs. 1-4, the hand-held straight grinder of the embodiment includes the grinding heads, an elastic collet assembly 10, an output shaft 19, a clutch assembly 30, a power assembly 40, an inner housing 50, an outer housing 60 and a rotary shell 70.

The elastic collet assembly 10 contains an elastic collet 101 and a collet connector 102.

The clutch assembly 30 contains a first clutch unit 31, a toggling unit 32 and a second clutch unit 33,
where the first clutch unit 31 contains a first detent ring 311, a first spring 312, and a first axial clutch 313; the toggling unit 32 contains a rotary clutch 321 and a toggling rod 322; and the second clutch unit 33 contains a second axial clutch 331, a second spring 332 and a second detent ring 333.

The power assembly 40 contains a motor 401, a main control circuit board 403 and a power supply 402.

A housing contains the inner housing 50, the outer housing 60, and the rotary shell 70.

The inner housing 50 includes a right housing 501 and a left housing 502, where an end surface of the right housing 501 and an end surface of the left housing 502 are mutually abutted, and assembled and connected to form a whole. A guiding slot convenient for the toggling rod 322 to extend out of ends is also formed in each of the right housing 501 and the left housing 502, and the toggling rod 322 can move along the guiding slot when rotating. The outer housing 60 includes a front housing 601 and a rear housing 602, where the front housing 601 sleeves a front position of the inner housing 50, and the front housing 601 facilitates prevention of the rotary shell 70 from loosening.

The outer housing 60 contains the front housing 601, the rear housing 602 and a magnet I 603, where the rear housing 602 sleeves a rear position of the inner housing 50. In order to facilitate disassembly and assembly of the rear housing 602, the rear housing 602 and the inner housing 50 are connected through buckles. In one embodiment, the buckles are arranged on two sides of the inner housing 50, and the buckle on any side is obliquely arranged in an assembled direction. Correspondingly, two extending elastic sheets 6022 are arranged at an end of the rear housing 602. When the rear housing 602 is assembled on the inner housing 50, the buckles can be clamped in clamping slots 6023 of the corresponding elastic sheet 6022. When grinder disassembly is needed, the elastic sheets 6022 can be controlled to be separated from the buckles, and further disassembly of the rear housing 602 is convenient.

A groove I 6021 is formed in the tail of the rear housing 602, and the magnet I 603 is fixedly placed in the groove I 6021. A through hole 6024 is also formed in the tail of the rear housing 602, located on a side surface of the magnet I 603, and used for mounting of the charging port.

In addition, the rotary shell 70 is mounted between the front housing 601 and the rear housing 602. The rotary shell 70 movably sleeves positions where the guiding slots are located in the right housing 501 and the left housing 502, and an inner side wall of the rotary shell 70 cooperates with the toggling rod 322 extending out from the guiding slots. In this way, when the rotary shell 70 is controlled to rotate, the toggling rod 322 can be driven to rotate synchronously, and further the elastic collet 101 is convenient to operate to be opened so as to replace the grinding head.

The grinding heads are used as working heads for processing such as grinding, carving, and punching, and are detachably mounted at one end extending out of the inner housing 50, of the elastic collet 101. Correspondingly, an opening 1011 is formed in one end of the elastic collet 101, and the opening 1011 communicates with an internal space of the elastic collet 101. In this way, tail ends of the grinding heads are in inserting connection to the elastic collet 101 through the opening 1011.

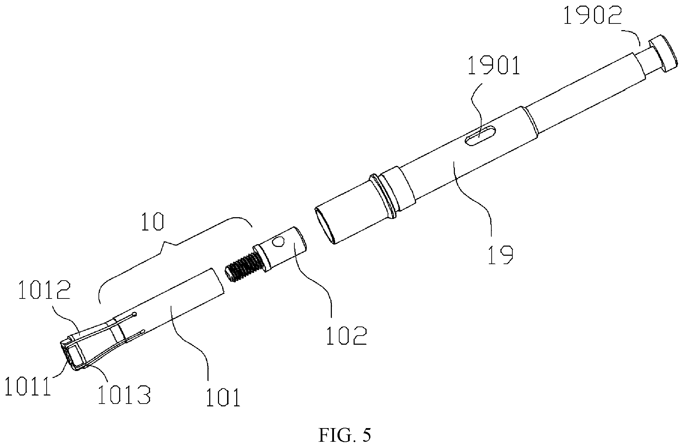

As shown in FIG. 5, one end of the output shaft 19 sleeves axially the elastic collet assembly 10 in a sliding manner, initially extends to the opening 1011 of the elastic collet assembly 10, and is in interference fit with the elastic collet assembly 10. The other end of the output shaft 19 is in transmission connection to the motor 401, and is fixedly connected to the elastic collet assembly 10 radially through the collet connector 102. In this way, when the output shaft 19 is driven by the motor 401 to rotate, the elastic collet assembly 10 radially connected to the output shaft can be driven to rotate synchronously, and the grinding heads can be conveniently driven to achieve processing such as grinding, carving and punching. A rolling bearing 21 also sleeves a middle of the output shaft 19, and the rolling bearing 21 provides radial supporting acting force for the output shaft 19. A damping rubber sleeve 20 sleeves the rolling bearing 21.

In one implementation, to achieve radial connection between the output shaft 19 and the elastic collet assembly 10, the hand-held straight grinder further includes a pin 25. The pin 25 radially penetrates through the collet connector 102, and the collet connector 102 is in threaded connection to the other end of the elastic collet 101. Chutes 1901 axially extending are formed in the output shaft 19, and the pin 25 extends into the chutes 1901, and slides along the chutes 1901 along with the elastic collet assembly 10. In this way, when the output shaft 19 is driven by the motor 401 to rotate, the elastic collet assembly 10 can be driven through the pin 25 to rotate synchronously.

The power assembly 40 contains the motor 401, the power supply 402 and the main control circuit board 403, where the output end of the motor 401 is in transmission connection to one end of the output shaft 19. The power supply 402 can be batteries built in the hand-held straight grinder, the batteries are located in a corresponding battery compartment, and are connected to the main control circuit board 403, and the main control circuit board 403 is connected to the motor 401. The built-in batteries can be a rechargeable battery pack.

Therefore, the power supply 402 supplies electricity for the motor 401 continuously, and the motor 401 further drives the output shaft 19 to rotate. In order to facilitate transmission connection between the output end of the motor 401 and the output shaft 19, the output end and the output shaft can be in interference fitting through a cylindrical surface. Correspondingly, an outer side wall of the output end of the motor 401 is set to be in a cylindrical surface structure. Or the transmission connection can be performed through cooperation with planes or a pin shaft penetrating radially.

In addition, the hand-held straight grinder in the embodiment further includes the main control circuit board 403 controlling the motor 401 to work. The main control circuit board 403 is mounted in the inner housing 50. In the embodiment, the main control circuit board 403 can use a conventional main control circuit board in the prior art, and those skilled in the art can design the main control circuit board in corresponding models according to actual requirements.

The charging port of the power supply is further integrated in the main control circuit board 403. The charging port penetrates through a through hole 6024 in a rear part of the rear housing 602, and is exposed to the rear part of the rear housing 602.

In one implementation, a dust cover assembly 90 includes a magnet II 901, and a dust cover 902, and the dust cover assembly 90 can be connected to the outer housing 60 in a drawing and pulling manner. Correspondingly, the dust cover assembly 90 is provided with a connecting rod 9002 in inserting connection to the outer housing 60, and a limit bulge 9003 is arranged at an end of the connecting rod. In another implementation, the dust cover assembly 90 can also be rotationally connected to the outer shell 50 through a pivot 9002. A round pit II is formed in a middle of the dust cover 902, and the magnet II 901 is fixedly placed in the groove I.

In order to facilitate detachable mounting of the grinding heads in the elastic collet 101, the opening 1011 of the elastic collet 101 is set to be in a structure which can be opened or clamped tightly. In order to achieve the above objective, in the embodiment, at least one notch 1013 axially extending to an end surface is formed in an end of the opening 1011 of the elastic collet 101. In this way, the notches 1013 divide the elastic collet 101 into at least two parts. Therefore, when all parts are separated, the opening 1011 is in an opened state to facilitate disassembly and assembly of the grinding heads; and when all the parts return to an initial state, the opening 1011 is in a tight clamped state to facilitate tight clamping and fixing of the grinding heads. In one implementation, four notches 1013 are formed and are arranged in a circumferential direction in a uniformly-spaced manner.

The clutch assembly 30 is integrated in the inner housing 50, and is independently arranged relative to the inner housing 50, and the clutch assembly 30 controls the opening 1011 of the elastic collet 101 to be opened or clamped tightly through the output shaft 19. In the embodiment, when the elastic collet 101 is controlled to be opened or clamped tightly, acting force applied is from internal acting force, that is to say, the acting force cannot be passed to the inner housing 50 or the outer housing 60. In this way, requirements for mechanical strength of the outer shell are not high, and the outer shell can be made of plastic, which is conducive to cost reduction. In the prior art, when the elastic collet 101 is controlled to be opened or clamped tightly, the acting force applied is from the inner housing 50 and the outer housing 60. In this way, requirements for the mechanical strength of the outer shell are high, and the outer shell needs to be made of aluminum alloys, which is not conducive to cost reduction.

Specifically, one end of the output shaft 19 axially sleeves the elastic collet assembly 10 in a sliding manner, initially extends to the opening 1011 of the elastic collet 101, and is radially pressed tightly on a peripheral side wall of the opening 1011, whereby the opening 1011 is in the radial contracted state. In this way, an end of the output shaft 19 initially enables the opening 1011 of the elastic collet 101 to be in the tight clamped state; and when the elastic collet 101 does axial upwards separating movement relative to the output shaft 19, the end of the output shaft 19 is separated from the opening 1011 of the elastic collet 101, and the opening 1011 of the elastic collet 101 is in an opened state. Correspondingly, a wall surface 1012 cooperating with the output shaft 19, at the end of the opening 1011 of the elastic collet 101, is a bevel radially protruding and extending. In this way, when the end of the output shaft 19 slides along the bevels, all parts of the opening 1011 can be pushed to move towards the center in a radial direction, and in this way, the output shaft 19 can conveniently push the opening 1011 of the elastic collet 101 to be clamped tightly.

As described above, the chutes 1901 axially extending are formed in the output shaft 19. In this way, the clutch assembly 30 can be conveniently used for driving the elastic collet assembly 10 to axially move in a certain range relative to the output shaft 19. That is to say, the pin 25 on the elastic collet 101 slides within a range defined by the chutes 1901.

Specifically, the clutch assembly 30 includes the first clutch unit 31, the toggling unit 32, and the second clutch unit 33.

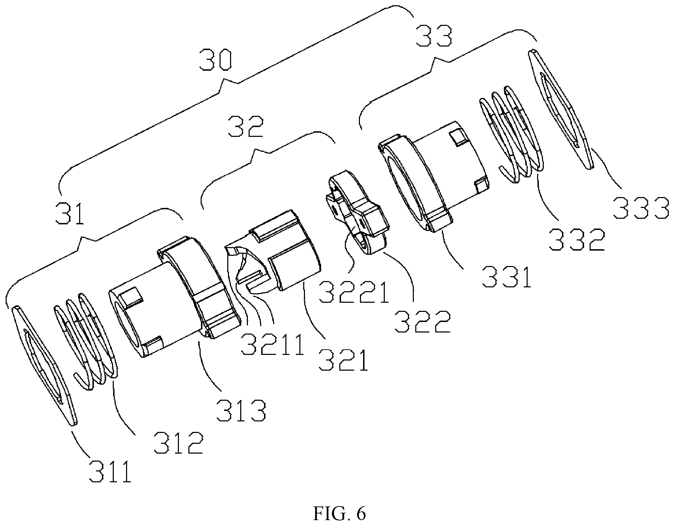

As shown in FIG. 6, the toggling unit 32 is located between the first clutch unit 31 and the second clutch unit 33, and when the toggling unit 32 moves, the elastic collet assembly 10 can be driven through the first clutch unit 31 to axially move relative to the output shaft 19, whereby the opening 1011 is in the radial expanded state; and the toggling unit 32 also receives restoring force from the first clutch unit 31 and the second clutch unit 33 when moving.

Specifically, the toggling unit 32 can push the first clutch unit 31 to drive the elastic collet assembly 10 to axially move relative to the output shaft 19 in a rotating manner, whereby disassembly, assembly and replacement of the grinding heads can be conveniently achieved. At this time, the toggling unit 32 includes the toggling rod 322 and the rotary clutch 321,
where the rotary clutch 321 sleeves the output shaft 19, a plurality of skewed teeth 3211 extending into the first clutch unit 31 are arranged at one end of the rotary clutch 321, and an acting surface of each skewed tooth 3211 cooperates with a corresponding bevel in the first clutch unit 31. In this way, the rotary clutch 321 can push the first clutch unit 31 to axially move through the skewed teeth 3211 when rotating. In one implementation, each skewed tooth 3211 consists of two or more continuous bevels or helical surfaces, the quantity of the skewed teeth 3211 is three, and the three skewed teeth 3211 are distributed in a circumferential direction at one end of the rotary clutch 321 in a uniformly-spaced manner.

The toggling rod 322 is connected to the rotary clutch 321, and can drive the rotary clutch 321 to rotate voluntarily when rotating, and the rotary clutch 321 pushes the first clutch unit 31 to axially move through voluntary rotation. In one implementation, the toggling rod 322 sleeves the rotary clutch 321 through a middle circular ring structure 3221, the bulge or the groove cooperating with the rotary clutch 321 is formed in an inner side wall of the circular ring structure 3221. In this way, when two ends of the toggling rod 322 are acted to rotate, the rotary clutch 321 can be driven to rotate synchronously. At this time, the rotary clutch 321 cooperates with the first clutch unit 31 through the bevels, whereby the first clutch unit 31 can be pushed to axially move.

Specifically, the first clutch unit 31 includes the first axial clutch 313, the first spring 312 and the first detent ring 311, where the first axial clutch 313 sleeves the output shaft 19, and the bevels 3211 cooperating with the skewed teeth 3211 are arranged on an inner side wall of the first axial clutch 313. The front end of the first axial clutch 313 can be abutted against the pin radially penetrating through the collet connector 102. In this way, when the toggling rod 322 pushes the first axial clutch 313 to axially move through the rotary clutch 321, the first axial clutch 313 can further push the elastic collet 101 to move away from the output shaft 19. At this time, the output shaft 19 is separated from the opening 1011 of the elastic collet 101, all the parts of the opening 1011 are separated, and further the opening 1011 of the elastic collet 101 is opened, whereby disassembly, assembly and replacement of the grinding heads can be facilitated.

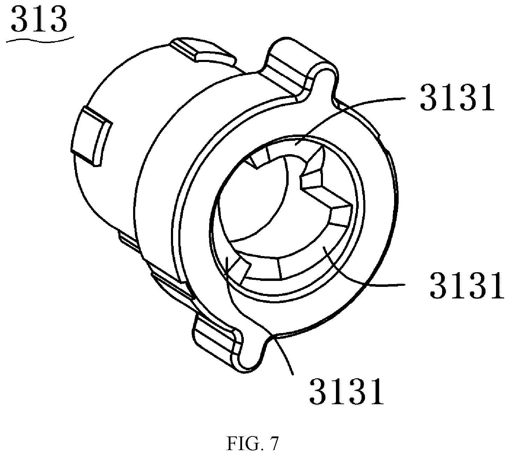

As shown in FIG. 7, the bevels 323 consist of a first bevel 324 and a second bevel 325, having different slopes, where the first bevel 324 is initially abutted against an acting surface of the skewed teeth 3211 of the rotary clutch 321, and when the rotary clutch 321 rotates, the acting surface of the skewed teeth 3211 slides to the second bevel 325 from the first bevel 324. A slope of the first bevel 324 is greater than that of the second bevel 325. In this way, the acting surface of the skewed teeth 3211 slides along the first bevel 324 to eject out the elastic collet 101, and slides to the second bevel 325 to achieve empty run.

In order to conveniently enable the front end of the first axial clutch 313 to act on the pin 25 to push the elastic collet 101 to axially move, the pin 25 is fixed by a chuck 24. Specifically, the chutes 1901 are centrally and symmetrically distributed in the output shaft 19, two ends of the pin 25 extend out of the corresponding chutes 1901, the chuck 24 also sleeves the output shaft 19, and the two ends of the pin 25 are embedded in the chuck 24 respectively. In this way, while the chuck 24 is conveniently used for fixing the pin 25, a side surface of the chuck 24 also forms the acting surface abutted against the front end of the first axial clutch 313, whereby the front end of the first axial clutch 313 pushes the elastic collet 101 to axially move.

Further, the first spring 312 sleeves the first axial clutch 313, and provides elastic restoring force to the first axial clutch 313 when the first axial clutch 313 drives the elastic collet assembly 10 to axially move. In this way, when the toggling rod 322 rotates reversely, the rotary clutch 321 synchronously returns to an initial position, and at this time, the first axial clutch 313 also returns to the initial position correspondingly under the action of the first spring 312.

Correspondingly, in order to enable the elastic collet assembly 10 to reset, a spring L23 also sleeves the output shaft 19, and the spring L23 is initially in a compressed state; and one end of the spring L23 is abutted against on a limit sleeve 22, the limit sleeve 22 sleeves the output shaft 19 and is abutted against a step surface of the output shaft 19, and the other end of the spring L23 is abutted against on the chuck 24. In this way, when the first axial clutch 313 returns to the initial position, the opening 1011 of the elastic collet 101 is clamped in the output shaft 19 once again under the action of the spring L23, whereby the opening 1011 is re-clamped tightly, and further the replaced grinding head is clamped and fixed.

When the second clutch unit 33 is used for providing returning acting force to the rotary clutch 321 when the toggling rod 322 rotates reversely. Specifically, the second clutch unit 33 includes the second axial clutch 331 and the second spring 332, where the second axial clutch 331 sleeves the output shaft 19, and the front end of the second axial clutch 331 is abutted against the rear end of the rotary clutch 321. The second spring 332 sleeves the second axial clutch 331. In this way, when the rotary clutch 321 moves back, the second spring 332 is in the compressed state, and provides elastic restoring force to the rotary clutch 321 through the second axial clutch 331. Therefore, when the toggling rod 322 pushes the rotary clutch 321 to return to the initial position when rotating reversely.

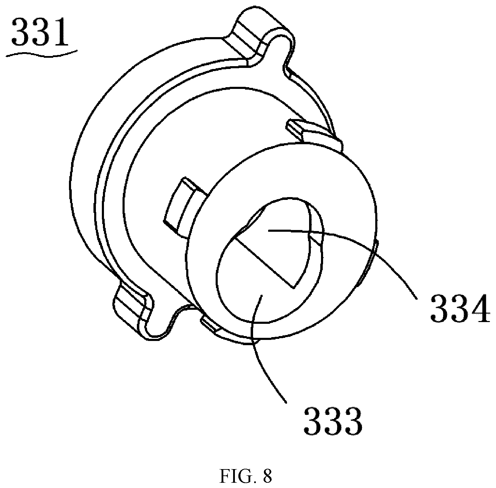

As shown in FIG. 8, in order to facilitate assembly between the second axial clutch 331 and the output shaft 19, a mounting hole is formed in the rear end of the second axial clutch 331, a part of the mounting hole and the second axial clutch 331 are concentrically arranged, and remaining parts of the mounting hole and the second axial clutch 331 are eccentrically arranged, where a hole diameter of an eccentric part 333 is greater than a hole diameter of a concentric part 334, a limit slot 1902 is formed in one end of the output shaft 19, and the limit slot 1902 is assembled in the concentric part 334 of the mounting hole; and the hole diameter of the eccentric part 333 is greater than an outer diameter of one end of the output shaft 19, and the hole diameter of the concentric part 334 is smaller than the outer diameter of one end of the output shaft 19. In this way, during the assembly of the output shaft 19, firstly the output shaft passes through the eccentric part 333 of the mounting hole, and then radially moves to enable the limit slot 1902 to be stuck into the concentric part 334 of the mounting hole, and further the mounting of the output shaft 19 is convenient to complete. An assembly manner between the second axial clutch 331 and the output shaft 19 has better stability compared to a threaded connection manner, solving the problem of easy loosening of the threaded connection.

In order to enable the hand-held straight grinder in the embodiment to have an illumination function, the hand-held straight grinder further includes an LED lamp 80 and a lampshade 81, where the LED lamp 80 is mounted at a front end of the front housing 601, and the lampshade 81 is buckled on the LED lamp 80 to protect the LED lamp 80.

In conclusion, the hand-held straight grinder of the present disclosure is provided with the elastic collet, through manipulating the toggling unit in the clutch assembly, the output shaft can be driven to axially move, and the output shaft can further drive the opening clamping and holding the grinding heads in the elastic collet to open or clamp tightly, whereby the disassembly, assembly and replacement of the grinding heads can be facilitated. In the second clutch unit of the present disclosure, the mounting hole consists of the eccentric part having a slightly large hole diameter, and the concentric part having a slightly small hole diameter. In this way, during the assembly of the output shaft, firstly the output shaft passes through the eccentric part of the mounting hole, and then radially moves to enable the limit slot to be stuck into the concentric part of the mounting hole, and further mounting of the output shaft is convenient to complete.

For those skilled in the art, it is evident that the present disclosure is not limited to details of exemplary embodiments above, and can be implemented in other specific forms without departing from the spirit or basic features of the present disclosure. Therefore, from any perspective, the embodiments should be regarded as exemplary and non-restrictive, and the scope of the present disclosure is limited by the accompanying claims rather than the above description. Therefore, it is intended to encompass all variations that fall within the meaning and scope of equivalent elements of the claims within the present disclosure. Any reference numeral in the accompanying drawings in the claims should not be regarded as limiting the claims involved.

In addition, it should be understood that although the description is described according to implementations, not each implementation only contains an independent technical solution, the description is narrated in this manner for clarity only, those skilled in the art should treat the description as a whole, and the technical solutions in each embodiment can be appropriately combined to form other implementations that those skilled in the art can understand.

## Claims

1. A hand-held straight grinder, comprising an elastic collet assembly, an output shaft, a clutch assembly and a power assembly, wherein
the elastic collet assembly contains an elastic collet and a collet connector, and a tail of the elastic collet is connected to a front end of the collet connector;
an opening is formed in one end of the elastic collet, and the opening communicates with an internal space of the elastic collet;
one end of the output shaft is in transmission connection to the power assembly, and the other end of the output shaft axially sleeves the elastic collet assembly in a sliding manner, and is radially and fixedly connected to the elastic collet assembly; the other end initially extends to the opening, and the opening is in a radial contracted or expanded state through cooperation;
the clutch assembly comprises a toggling unit, a first clutch unit and a second clutch unit, wherein
the toggling unit is located between the first clutch unit and the second clutch unit, and when the toggling unit moves, the elastic collet can be driven through the first clutch unit to axially move relative to the output shaft, whereby the opening is in the radial expanded state; and the toggling unit also receives restoring force from the second clutch unit when moving.

2. The hand-held straight grinder according to claim 1, wherein at least one notch axially extending to an end surface is formed in an opening end of the elastic collet.

3. The hand-held straight grinder according to claim 2, wherein a wall surface cooperating with the output shaft, of the opening end of the elastic collet is a conical surface.

4. The hand-held straight grinder according to claim 1, further comprising a pin, wherein the pin radially penetrates through the collet connector, chutes axially extending are formed in the output shaft, and the pin extends into the chutes, and slides along the chutes along with the elastic collet assembly.

5. The hand-held straight grinder according to claim 4, wherein the chutes are centrally and symmetrically distributed in the output shaft, two ends of the pin extend out of the corresponding chutes, a chuck also sleeves the output shaft, and the two ends of the pin are embedded in the chuck respectively.

6. The hand-held straight grinder according to claim 5, wherein one end of the first clutch unit can be abutted against on the chuck and the pin, and the elastic collet is driven by the pin to axially move relative to the output shaft.

7. The hand-held straight grinder according to claim 5, wherein a spring also sleeves the output shaft, and the spring is initially in a compressed state; and one end of the spring is abutted against on a limit sleeve, the limit sleeve sleeves the output shaft and is abutted against a step surface of the output shaft, and the other end of the spring is abutted against on the chuck.

8. The hand-held straight grinder according to claim 1, wherein the toggling unit comprises a toggling rod and a rotary clutch, wherein
a first through hole is formed in a center of the rotary clutch, the output shaft penetrates through the first through hole and maintains a distance from a hole wall, a plurality of skewed teeth extending into the first clutch unit are arranged at one end of the rotary clutch, and an acting surface of each skewed tooth cooperates with a corresponding bevel in the first clutch unit; and the toggling rod is connected to the rotary clutch, and can drive the rotary clutch to rotate voluntarily when rotating, and the rotary clutch pushes the first clutch unit to axially move through voluntary rotation.

9. The hand-held straight grinder according to claim 8, wherein each skewed tooth consists of two or more continuous bevels or helical surfaces, the quantity of the skewed teeth is three, and the three skewed teeth are distributed in a circumferential direction at one end of the rotary clutch in a uniformly-spaced manner.

10. The hand-held straight grinder according to claim 8, wherein the first clutch unit comprises a first axial clutch, a first spring and a first detent ring, wherein
a second through hole is formed in a center of the first axial clutch, the output shaft penetrates through the second through hole and maintains a distance from the hole wall, the bevels cooperating with the skewed teeth are arranged on an inner side wall of the first axial clutch, and a front end of the first axial clutch can drive the elastic collet to axially move relative to the output shaft;
and the first spring sleeves the first axial clutch, one end of the first spring is abutted against on a boss of the first axial clutch, the other end of the first spring is abutted against on the first detent ring, and elastic restoring force is provided for the first axial clutch when the first axial clutch drives the elastic collet to axially move.

11. The hand-held straight grinder according to claim 1, wherein the second clutch unit comprises a second axial clutch, a second spring and a second detent ring, wherein
the second axial clutch sleeves the output shaft, and a front end of the second axial clutch is abutted against a rear end of the rotary clutch; and the second spring sleeves the second axial clutch, one end of the second spring is abutted against on a boss of the second axial clutch, the other end of the second spring is abutted against on the second detent ring, and elastic restoring force is provided for the rotary clutch through the second axial clutch when the rotary clutch moves back.

12. The hand-held straight grinder according to claim 10, wherein the first detent ring is abutted against on a bulge I of an inner housing, and the second detent ring is abutted against on a bulge II of the inner housing; and the first clutch unit, the toggling unit and the second clutch unit are in serial connection, and are axially placed in a floating manner between the bulge I and the bulge II.

13. The hand-held straight grinder according to claim 11, wherein a mounting hole is formed in a rear end of the second axial clutch, a part of the mounting hole and the second axial clutch are concentrically arranged, remaining parts of the mounting hole and the second axial clutch are eccentrically arranged, a hole diameter of an eccentric part is greater than a hole diameter of a concentric part, a limit slot is formed in one end of the output shaft, and the limit slot is assembled in the concentric part of the mounting hole; and the hole diameter of the eccentric part is greater than an outer diameter of one end of the output shaft, and the hole diameter of the concentric part is smaller than the outer diameter of one end of the output shaft.

14. The hand-held straight grinder according to claim 1, wherein the power assembly comprises a motor, a main control circuit board and a power supply, an output end of the motor and one end of the output shaft are in transmission connection, the power supply is connected to the main control circuit board, and the main control circuit board is connected to the motor.

15. The hand-held straight grinder according to claim 14, wherein the main control circuit board is mounted between a left housing and a right housing of the hand-held straight grinder, a charging port of the power supply is formed in a tail of the circuit board, and the charging port of the power supply is a through hole penetrating through a tail of a rear housing of the hand-held straight grinder.

16. The hand-held straight grinder according to claim 15, further comprising a magnet I, a magnet II and a dust cover, wherein the dust cover is in abutted connection to a tail of an outer housing of the hand-held straight grinder, a pit I is formed in the tail of the outer housing, and the magnet I is fixedly mounted in the pit I; a pit II is formed in one side of the dust cover, and the magnet II is fixedly mounted in the pit II; and the magnet I adsorbs the magnet II to close the dust cover, and at this time, the dust cover covers an outer side of the charging port of the power supply.

17. The hand-held straight grinder according to claim 1, further comprising the inner housing, the outer housing and a rotary shell, wherein the outer housing comprises a front housing and a rear housing, the front housing sleeves a front position of the inner housing, and is connected to the inner housing through a bayonet; the rear housing sleeves a rear position of the inner housing, and is connected to the front housing through a bayonet; and the rotary shell movably sleeves the inner housing, is located between the front housing and the rear housing, and can drive the toggling unit to rotate.
